# EUROPEAN PATENT APPLICATION

(11) **EP 4 415 417 A1**
(43) Date of publication of application: **14.08.2024**
(21) Application number: 22885812.2
(22) Date of filing: 21.10.2022
(51) Int. Cl.: H04W 24/10, H04B 7/06

(54) **COMMUNICATION METHOD AND COMMUNICATION APPARATUS**

(30) Priority: 28.10.2021 CN 202111265445; 22.12.2021 CN 202111582383
(71) Applicant: Huawei Technologies Co., Ltd., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN); LI, Xueru, Shenzhen, Guangdong 518129 (CN)
(74) Representative: Maiwald GmbH
(86) International application number: PCT/CN2022/126684
(87) International publication number: WO 2023/071935

(57) **Abstract**

Embodiments of this application provide a communication method and a communication apparatus. The communication method includes: A first device receives first configuration information sent by a second device, where the first configuration information indicates the first device to send CSI reports in a hybrid mode of a first mode and a second mode. The first device receives first information sent by the second device, where the first information indicates the first device to adjust a proportion of sending a CSI report in the first mode and/or a proportion of sending a CSI report in the second mode, and the first information is determined by the second device based on first communication performance and second communication performance. According to the technical solutions, performance of an AI module in a wireless communication system is monitored with fewer overheads.

## Description

This application claims priorities to Chinese Patent Application No. 202111265445.9, filed with the China National Intellectual Property Administration on October 28, 2021 and entitled "METHOD AND APPARATUS FOR CONFIGURING WORKING MODE IN COMMUNICATION SYSTEM", and to Chinese Patent Application No. 202111582383.4, filed with the China National Intellectual Property Administration on December 22, 2021 and entitled "COMMUNICATION METHOD AND COMMUNICATION APPARATUS", both of which are incorporated herein by reference in their entireties.

### TECHNICAL FIELD

Embodiments of this application relate to the communication field, and more specifically, to a communication method and a communication apparatus.

### BACKGROUND

With development of artificial intelligence (artificial intelligence, AI) technologies, an AI module may be used to replace some conventional functional modules in a wireless communication system. The AI technology is driven by data, and performance of the AI module is closely related to the data. Therefore, when a feature of the data differs greatly from a feature of AI training data, or when the data is not distributed in a same manner as the training data, the performance of the AI module may be poor.

Therefore, after the AI module is introduced into the wireless communication system, the performance of the AI module needs to be monitored.

### SUMMARY

Embodiments of this application provide a communication method and a communication apparatus. According to the technical solutions, performance of an AI module in a wireless communication system is monitored with fewer overheads.

According to a first aspect, a communication method is provided, including: A first device receives first configuration information sent by a second device, where the first configuration information indicates the first device to send channel state information CSI reports in a hybrid mode of a first mode and a second mode; and the first device receives first information sent by the second device, where the first information indicates the first device to adjust a proportion of sending a CSI report in the first mode and/or a proportion of sending a CSI report in the second mode, the first information is determined by the second device based on first communication performance and second communication performance, the first communication performance is communication performance of communicating with the first device by the second device based on the CSI report sent by the first device in the first mode, and the second communication performance is communication performance of communicating with the first device by the second device based on the CSI report sent by the first device in the second mode.

In this way, by receiving the first configuration information sent by the second device, the first device can send the CSI report based on the first configuration information, and receive the first information sent by the second device. The first information may indicate the first device to adjust the proportion of sending the CSI reports in the first mode and/or the second mode. In the technical solution, performance of the first device in the two modes can be monitored with fewer overheads. Further, the proportion of sending the CSI reports in the two modes can be adjusted in real time or in quasi-real time.

With reference to the first aspect, in an implementation of the first aspect, before the first device receives the first information sent by the second device, the method further includes: receiving a second activation message sent by the second device, where the second activation message is used to activate a target configuration in the first configuration information; and sending, by the first device, the CSI reports to the second device based on the target configuration.

In this way, the first device can activate the target configuration in the first configuration information based on the activation message sent by the second device, and send the CSI report based on the target configuration.

With reference to the first aspect, in an implementation of the first aspect, before the first device receives the first information sent by the second device, the method further includes: sending second information to the second device, where the second information includes the first communication performance and the second communication performance, or the second information includes a comparison result between the first communication performance and the second communication performance.

In this way, the first device collects statistics on the first communication performance and the second communication performance, and sends the first communication performance and the second communication performance or the comparison result between the first communication performance and the second communication performance to the second device, thereby helping the second device make a decision.

With reference to the first aspect, in an implementation of the first aspect, the first configuration information further includes the following information:
an evaluation indication, indicating the first device to evaluate the first communication performance and the second communication performance; an evaluation indicator, indicating the first device to evaluate the first communication performance and the second communication performance based on the evaluation indicator; or evaluation duration, indicating duration in which the first device evaluates the first communication performance and the second communication performance.

In the technical solution, the evaluation indication, the evaluation indicator, or the evaluation duration included in the first configuration information helps the first device evaluate the first communication performance and the second communication performance.

With reference to the first aspect, in an implementation of the first aspect, if the first communication performance is higher than the second communication performance, the first information indicates the first device to increase the proportion of the first mode and decrease the proportion of the second mode; or if the first communication performance is lower than the second communication performance, the first information indicates the first device to decrease the proportion of the first mode and increase the proportion of the second mode.

In this way, when sending CSI reports, the first device prefers to a working mode with good communication performance, thereby helping improve efficiency of sending the CSI reports.

With reference to the first aspect, in an implementation of the first aspect, the first configuration information indicates a first CSI report configuration used by the first device to send the CSI reports, the first CSI report configuration indicates the first device to send N CSI reports to the second device, and N is a positive integer; and a quantity of CSI reports sent by the first device in the first mode is K, a quantity of CSI reports sent by the first device in the second mode is N-K, and K is an integer greater than or equal to 0 and less than or equal to N.

With reference to the first aspect, in an implementation of the first aspect, the first CSI report configuration further indicates the first device to send a plurality of groups of N CSI reports.

With reference to the first aspect, in an implementation of the first aspect, the first configuration information indicates a first CSI report group configuration used by the first device to send the CSI reports, the first CSI report group configuration includes N second CSI report configurations, N is a positive integer, and each second CSI report configuration indicates one CSI report of the first device; and a quantity of CSI reports sent by the first device in the first mode is K, a quantity of CSI reports sent by the first device in the second mode is N-K, and K is an integer greater than or equal to 0 and less than or equal to N.

With reference to the first aspect, in an implementation of the first aspect, each second CSI report configuration indicates the first device to send a plurality of CSI reports.

With reference to the first aspect, in an implementation of the first aspect, the first configuration information indicates a second CSI report group configuration used by the first device to send the CSI reports, the second CSI report group configuration includes two third CSI report configurations, one of the two third CSI report configurations indicates the first device to send the CSI report in the first mode, and the other of the two third CSI report configurations indicates the first device to send the CSI report in the second mode.

With reference to the first aspect, in an implementation of the first aspect, a periodicity in which the first device sends the CSI report in the first mode is NT/K, and a periodicity in which the first device sends the CSI report in the second mode is T. N is a positive integer, K is a natural number, and the first device does not send the CSI report in the first mode when K is equal to 0.

With reference to the first aspect, in an implementation of the first aspect, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, when the proportion configuration information includes one or two of N, K, and the distribution indication information, other information needs to be indicated by another message or agreed upon in advance.

With reference to the first aspect, in an implementation of the first aspect, the first information is a first activation message, and the first activation message is used to activate a proportion set in the proportion set list; and N, K, and the distribution indication information are used to implement the first CSI report configuration; N, K, and the distribution indication information are used to implement the first CSI report group configuration; or N, K, and the distribution indication information are used to implement the second CSI report group configuration.

In the technical solution, the proportion set in the proportion set list can be activated by using the first activation message, to implement a configuration solution.

With reference to the first aspect, in an implementation of the first aspect, the method further includes:

The first device adjusts, based on the first information, the proportion of sending the CSI report by the first device in the first mode and/or the proportion of sending the CSI report by the first device in the second mode.

In the technical solution, the first device can adjust, based on an indication in the first information, the proportion of sending the CSI reports in the first mode and/or the second mode.

With reference to the first aspect, in an implementation of the first aspect, that the first device adjusts, based on the first information, the proportion of sending the CSI report by the first device in the first mode and/or the proportion of sending the CSI report by the first device in the second mode includes: determining, based on the first activation message, a CSI report configuration identifier and a proportion set sequence number that are in a trigger state list; determining a CSI report configuration table based on the CSI report configuration identifier; determining a proportion set list based on the CSI report configuration table; and determining and activating a proportion set in the proportion set list based on the proportion set list and the proportion set sequence number.

In the technical solution, the second device does not need to modify the first activation message, for example, a DCI message or a MAC CE message.

With reference to the first aspect, in an implementation of the first aspect, that the first device adjusts, based on the first information, the proportion of sending the CSI report by the first device in the first mode and/or the proportion of sending the CSI report by the first device in the second mode includes: determining a CSI report configuration identifier in a trigger state list based on the first activation message; determining a CSI report configuration table based on the CSI report configuration identifier; determining a proportion set list based on the CSI report configuration table; and determining and activating a proportion set in the proportion set list based on the proportion set list and a proportion set sequence number in the first activation message.

In the technical solution, the second device can locate a proportion set in the proportion set list by modifying an item in the first activation message.

With reference to the first aspect, in an implementation of the first aspect, the first activation message is a MAC CE message or a DCI message.

With reference to the first aspect, in an implementation of the first aspect, the target configuration includes the proportion set in the proportion set list.

With reference to the first aspect, in an implementation of the first aspect, the first configuration information is carried in a radio resource control RRC message.

With reference to the first aspect, in an implementation of the first aspect, the first mode is an artificial intelligence AI-based CSI report feedback mode, and the second mode is a codebook-based CSI report feedback mode.

According to a second aspect, a communication method is provided, including: A second device sends first configuration information to a first device, where the first configuration information indicates the first device to send channel state information CSI reports in a hybrid mode of a first mode and a second mode; and the second device sends first information to the first device based on first communication performance and second communication performance, where the first information indicates the first device to adjust a proportion of sending a CSI report in the first mode and/or a proportion of sending a CSI report in the second mode, the first communication performance is communication performance of communicating with the first device by the second device based on the CSI report sent by the first device in the first mode, and the second communication performance is communication performance of communicating with the first device by the second device based on the CSI report sent by the first device in the second mode.

In this way, the second device sends the configuration information to the first device, to indicate the first device to send, based on the configuration information, the CSI reports in the hybrid mode of the first mode and the second mode, and sends, to the first device based on the first communication performance and the second communication performance, the first information indicating the first device to adjust the proportion of sending the CSI report in the first mode and/or the proportion of sending the CSI report in the second mode. Therefore, performance of the first device in the two modes can be monitored. Further, the proportion of sending CSI reports in the two modes can be adjusted in real time or in quasi-real time.

With reference to the second aspect, in an implementation of the second aspect, before the second device sends the first information to the first device based on the first communication performance and the second communication performance, the method further includes: sending a second activation message to the first device, where the second activation message is used to activate a target configuration in the first configuration information.

With reference to the second aspect, in an implementation of the second aspect, before the second device sends the first information to the first device based on the first communication performance and the second communication performance, the method further includes: receiving second information sent by the first device, where the second information includes the first communication performance and the second communication performance, or the second information includes a comparison result between the first communication performance and the second communication performance.

With reference to the second aspect, in an implementation of the second aspect, the first configuration information further includes the following information:
an evaluation indication, indicating the first device to evaluate the first communication performance and the second communication performance; an evaluation indicator, indicating the first device to evaluate the first communication performance and the second communication performance based on the evaluation indicator; or evaluation duration, indicating duration in which the first device evaluates the first communication performance and the second communication performance.

With reference to the second aspect, in an implementation of the second aspect, if the first communication performance is higher than the second communication performance, the first information indicates the first device to increase the proportion of the first mode and decrease the proportion of the second mode; or if the first communication performance is lower than the second communication performance, the first information indicates the first device to decrease the proportion of the first mode and increase the proportion of the second mode.

With reference to the second aspect, in an implementation of the second aspect, the first configuration information indicates a first CSI report configuration used by the first device to send the CSI reports, the first CSI report configuration indicates the first device to send N CSI reports to the second device, and N is a positive integer; and a quantity of CSI reports sent by the first device in the first mode is K, a quantity of CSI reports sent by the first device in the second mode is N-K, and K is an integer greater than or equal to 0 and less than or equal to N.

With reference to the second aspect, in an implementation of the second aspect, the first CSI report configuration further indicates the first device to send a plurality of groups of N CSI reports.

With reference to the second aspect, in an implementation of the second aspect, the first configuration information indicates a first CSI report group configuration used by the first device to send the CSI reports, the first CSI report group configuration includes N second CSI report configurations, N is a positive integer, and each second CSI report configuration indicates one CSI report of the first device; and a quantity of CSI reports sent by the first device in the first mode is K, a quantity of CSI reports sent by the first device in the second mode is N-K, and K is an integer greater than or equal to 0 and less than or equal to N.

With reference to the second aspect, in an implementation of the second aspect, each second CSI report configuration indicates the first device to send a plurality of CSI reports.

With reference to the second aspect, in an implementation of the second aspect, the first configuration information indicates a second CSI report group configuration used by the first device to send the CSI reports, the second CSI report group configuration includes two third CSI report configurations, one of the two third CSI report configurations indicates the first device to send the CSI report in the first mode, and the other of the two third CSI report configurations indicates the first device to send the CSI report in the second mode.

With reference to the second aspect, in an implementation of the second aspect, a periodicity in which the first device sends the CSI report in the first mode is NT/K, and a periodicity in which the first device sends the CSI report in the second mode is T. N is a positive integer, K is a natural number, and the first device does not send the CSI report in the first mode when K is equal to 0.

With reference to the second aspect, in an implementation of the second aspect, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, when the proportion configuration information includes one or two of N, K, and the distribution indication information, other information needs to be indicated by another message or agreed upon in advance.

With reference to the second aspect, in an implementation of the second aspect, the first information is a first activation message, and the first activation message is used to activate a proportion set in the proportion set list; and N, K, and the distribution indication information are used to implement the first CSI report configuration; N, K, and the distribution indication information are used to implement the first CSI report group configuration; or N, K, and the distribution indication information are used to implement the second CSI report group configuration.

With reference to the second aspect, in an implementation of the second aspect, the first activation message is a MAC CE message or a DCI message.

With reference to the second aspect, in an implementation of the second aspect, the target configuration includes the proportion set in the proportion set list.

With reference to the second aspect, in an implementation of the second aspect, the first configuration information is carried in a radio resource control RRC message.

With reference to the second aspect, in an implementation of the second aspect, the first mode is an artificial intelligence AI-based CSI report feedback mode, and the second mode is a codebook-based CSI report feedback mode.

According to a third aspect, a communication apparatus is provided, including: a transceiver module, configured to receive first configuration information sent by a second device, where the first configuration information indicates the communication apparatus to send channel state information CSI reports in a hybrid mode of a first mode and a second mode. The transceiver module is further configured to receive first information sent by the second device, where the first information indicates the communication apparatus to adjust a proportion of sending a CSI report in the first mode and/or a proportion of sending a CSI report in the second mode, the first information is determined by the second device based on first communication performance and second communication performance, the first communication performance is communication performance of communicating with the communication apparatus by the second device based on the CSI report sent by the communication apparatus in the first mode, and the second communication performance is communication performance of communicating with the communication apparatus by the second device based on the CSI report sent by the communication apparatus in the second mode.

With reference to the third aspect, in an implementation of the third aspect, before the transceiver module receives the first configuration information sent by the second device, the transceiver module is further configured to: receive a second activation message sent by the second device, where the second activation message is used to activate a target configuration in the first configuration information; and send the CSI reports to the second device based on the target configuration.

With reference to the third aspect, in an implementation of the third aspect, before the transceiver module receives the first configuration information sent by the second device, the transceiver module is further configured to send second information to the second device, where the second information includes the first communication performance and the second communication performance, or the second information includes a comparison result between the first communication performance and the second communication performance.

With reference to the third aspect, in an implementation of the third aspect, the first configuration information further includes the following information: an evaluation indication, indicating the communication apparatus to evaluate the first communication performance and the second communication performance; an evaluation indicator, indicating the communication apparatus to evaluate the first communication performance and the second communication performance based on the evaluation indicator; or evaluation duration, indicating duration in which the communication apparatus evaluates the first communication performance and the second communication performance.

With reference to the third aspect, in an implementation of the third aspect, if the first communication performance is higher than the second communication performance, the first information indicates the communication apparatus to increase the proportion of the first mode and decrease the proportion of the second mode; or if the first communication performance is lower than the second communication performance, the first information indicates the communication apparatus to decrease the proportion of the first mode and increase the proportion of the second mode.

With reference to the third aspect, in an implementation of the third aspect, the first configuration information indicates a first CSI report configuration used by the communication apparatus to send the CSI reports, the first CSI report configuration indicates the communication apparatus to send N CSI reports to the second device, and N is a positive integer; and a quantity of CSI reports sent by the communication apparatus in the first mode is K, a quantity of CSI reports sent by the communication apparatus in the second mode is N-K, and K is an integer greater than or equal to 0 and less than or equal to N.

With reference to the third aspect, in an implementation of the third aspect, the first CSI report configuration further indicates the communication apparatus to send a plurality of groups of N CSI reports.

With reference to the third aspect, in an implementation of the third aspect, the first configuration information indicates a first CSI report group configuration used by the communication apparatus to send the CSI reports, the first CSI report group configuration includes N second CSI report configurations, N is a positive integer, and each second CSI report configuration indicates one CSI report of the communication apparatus; and a quantity of CSI reports sent by the communication apparatus in the first mode is K, a quantity of CSI reports sent by the communication apparatus in the second mode is N-K, and K is an integer greater than or equal to 0 and less than or equal to N.

With reference to the third aspect, in an implementation of the third aspect, each second CSI report configuration indicates the communication apparatus to send a plurality of CSI reports.

With reference to the third aspect, in an implementation of the third aspect, the first configuration information indicates a second CSI report group configuration used by the communication apparatus to send the CSI reports, the second CSI report group configuration includes two third CSI report configurations, one of the two third CSI report configurations indicates the communication apparatus to send the CSI report in the first mode, and the other of the two third CSI report configurations indicates the communication apparatus to send the CSI report in the second mode.

With reference to the third aspect, in an implementation of the third aspect, a periodicity in which the communication apparatus sends CSI reports in the first mode is NT/K, and a periodicity in which the communication apparatus sends the CSI report in the second mode is T. N is a positive integer, K is a natural number, and the communication apparatus does not send the CSI report in the first mode when K is equal to 0.

With reference to the third aspect, in an implementation of the third aspect, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, when the proportion configuration information includes one or two of N, K, and the distribution indication information, other information needs to be indicated by another message or agreed upon in advance.

With reference to the third aspect, in an implementation of the third aspect, the first information is a first activation message, and the first activation message is used to activate a proportion set in the proportion set list; and N, K, and the distribution indication information are used to implement the first CSI report configuration; N, K, and the distribution indication information are used to implement the first CSI report group configuration; or N, K, and the distribution indication information are used to implement the second CSI report group configuration.

With reference to the third aspect, in an implementation of the third aspect, the communication apparatus further includes: an adjustment module, configured to adjust, based on the first information, the proportion of sending the CSI report by the communication apparatus in the first mode and/or the proportion of sending the CSI report by the communication apparatus in the second mode.

With reference to the third aspect, in an implementation of the third aspect, the adjustment module is specifically configured to: determine, based on the first activation message, a CSI report configuration identifier and a proportion set sequence number that are in a trigger state list; determine a CSI report configuration table based on the CSI report configuration identifier; determine a proportion set list based on the CSI report configuration table; and determine and activate a proportion set in the proportion set list based on the proportion set list and the proportion set sequence number.

With reference to the third aspect, in an implementation of the third aspect, the adjustment module is specifically configured to: determine a CSI report configuration identifier in a trigger state list based on the first activation message; determine a CSI report configuration table based on the CSI report configuration identifier; determine a proportion set list based on the CSI report configuration table; and determine and activate a proportion set in the proportion set list based on the proportion set list and a proportion set sequence number in the first activation message.

With reference to the third aspect, in an implementation of the third aspect, the first activation message is a MAC CE message or a DCI message.

With reference to the third aspect, in an implementation of the third aspect, the target configuration includes the proportion set in the proportion set list.

With reference to the third aspect, in an implementation of the third aspect, the first configuration information is carried in a radio resource control RRC message.

With reference to the third aspect, in an implementation of the third aspect, the first mode is an artificial intelligence AI-based CSI report feedback mode, and the second mode is a codebook-based CSI report feedback mode.

According to a fourth aspect, a communication apparatus is provided, including: a transceiver module, configured to send first configuration information to a first device, where the first configuration information indicates the first device to send channel state information CSI reports in a hybrid mode of a first mode and a second mode. The transceiver module is further configured to send first information to the first device based on first communication performance and second communication performance, where the first information indicates the first device to adjust a proportion of sending a CSI report in the first mode and/or a proportion of sending a CSI report in the second mode, the first communication performance is communication performance of communicating with the first device by the communication apparatus based on the CSI report sent by the first device in the first mode, and the second communication performance is communication performance of communicating with the first device by the communication apparatus based on the CSI report sent by the first device in the second mode.

With reference to the fourth aspect, in an implementation of the fourth aspect, before the transceiver module sends the first information to the first device based on the first communication performance and the second communication performance, the transceiver module is further configured to send a second activation message to the first device, where the second activation message is used to activate a target configuration in the first configuration information.

With reference to the fourth aspect, in an implementation of the fourth aspect, before the transceiver module sends the first information to the first device based on the first communication performance and the second communication performance, the transceiver module is further configured to receive second information sent by the first device, where the second information includes the first communication performance and the second communication performance, or the second information includes a comparison result between the first communication performance and the second communication performance.

With reference to the fourth aspect, in an implementation of the fourth aspect, the first configuration information further includes the following information: an evaluation indication, indicating the first device to evaluate the first communication performance and the second communication performance; an evaluation indicator, indicating the first device to evaluate the first communication performance and the second communication performance based on the evaluation indicator; or evaluation duration, indicating duration in which the first device evaluates the first communication performance and the second communication performance.

With reference to the fourth aspect, in an implementation of the fourth aspect, if the first communication performance is higher than the second communication performance, the first information indicates the first device to increase the proportion of the first mode and decrease the proportion of the second mode; or if the first communication performance is lower than the second communication performance, the first information indicates the first device to decrease the proportion of the first mode and increase the proportion of the second mode.

With reference to the fourth aspect, in an implementation of the fourth aspect, the first configuration information indicates a first CSI report configuration used by the first device to send the CSI reports, the first CSI report configuration indicates the first device to send N CSI reports to the communication apparatus, and N is a positive integer; and a quantity of CSI reports sent by the first device in the first mode is K, a quantity of CSI reports sent by the first device in the second mode is N-K, and K is an integer greater than or equal to 0 and less than or equal to N.

With reference to the fourth aspect, in an implementation of the fourth aspect, the first CSI report configuration further indicates the first device to send a plurality of groups of N CSI reports.

With reference to the fourth aspect, in an implementation of the fourth aspect, the first configuration information indicates a first CSI report group configuration used by the first device to send the CSI reports, the first CSI report group configuration includes N second CSI report configurations, N is a positive integer, and each second CSI report configuration indicates one CSI report of the first device; and a quantity of CSI reports sent by the first device in the first mode is K, a quantity of CSI reports sent by the first device in the second mode is N-K, and K is an integer greater than or equal to 0 and less than or equal to N.

With reference to the fourth aspect, in an implementation of the fourth aspect, each second CSI report configuration indicates the first device to send a plurality of CSI reports.

With reference to the fourth aspect, in an implementation of the fourth aspect, the first configuration information indicates a second CSI report group configuration used by the first device to send the CSI reports, the second CSI report group configuration includes two third CSI report configurations, one of the two third CSI report configurations indicates the first device to send the CSI report in the first mode, and the other of the two third CSI report configurations indicates the first device to send the CSI report in the second mode.

With reference to the fourth aspect, in an implementation of the fourth aspect, a periodicity in which the first device sends the CSI report in the first mode is NT/K, and a periodicity in which the first device sends the CSI report in the second mode is T. N is a positive integer, K is a natural number, and the first device does not send the CSI report in the first mode when K is equal to 0.

With reference to the fourth aspect, in an implementation of the fourth aspect, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, when the proportion configuration information includes one or two of N, K, and the distribution indication information, other information needs to be indicated by another message or agreed upon in advance.

With reference to the fourth aspect, in an implementation of the fourth aspect, the first information is a first activation message, and the first activation message is used to activate a proportion set in the proportion set list; and N, K, and the distribution indication information are used to implement the first CSI report configuration; N, K, and the distribution indication information are used to implement the first CSI report group configuration; or N, K, and the distribution indication information are used to implement the second CSI report group configuration.

With reference to the fourth aspect, in an implementation of the fourth aspect, the first activation message is a MAC CE message or a DCI message.

With reference to the fourth aspect, in an implementation of the fourth aspect, the target configuration includes the proportion set in the proportion set list.

With reference to the fourth aspect, in an implementation of the fourth aspect, the first configuration information is carried in a radio resource control RRC message.

With reference to the fourth aspect, in an implementation of the fourth aspect, the first mode is an artificial intelligence AI-based CSI report feedback mode, and the second mode is a codebook-based CSI report feedback mode.

According to a fifth aspect, a terminal device is provided, including at least one processor, where the at least one processor is coupled to at least one memory, and the at least one processor is configured to execute a computer program or instructions stored in the at least one memory, so that the communication method according to any one of the first aspect and the possible implementations of the first aspect is performed.

According to a sixth aspect, a network device is provided, including at least one processor, where the at least one processor is coupled to at least one memory, and the at least one processor is configured to execute a computer program or instructions stored in the at least one memory, so that the communication method according to any one of the second aspect and the possible implementations of the second aspect is performed.

According to a seventh aspect, a chip is provided. The chip includes a processor and a communication interface, the communication interface is configured to receive a signal, and transmit the signal to the processor, and the processor processes the signal, so that the communication method according to any one of the first aspect and the possible implementations of the first aspect is performed.

According to an eighth aspect, a chip is provided. The chip includes a processor and a communication interface, the communication interface is configured to receive a signal, and transmit the signal to the processor, and the processor processes the signal, so that the communication method according to any one of the second aspect and the possible implementations of the second aspect is performed.

According to a ninth aspect, a chip is provided. The chip is coupled to a memory, and is configured to read and execute program instructions stored in the memory, to implement the communication method according to any one of the first aspect and the possible implementations of the first aspect, or the communication method according to any one of the second aspect and the possible implementations of the second aspect.

According to a tenth aspect, a computer-readable storage medium is provided. The computer-readable storage medium stores computer instructions, and when the computer instructions are run on a computer, the communication method according to any one of the first aspect and the possible implementations of the first aspect is performed.

According to an eleventh aspect, a computer-readable storage medium is provided. The computer-readable storage medium stores computer instructions, and when the computer instructions are run on a computer, the communication method according to any one of the second aspect and the possible implementations of the second aspect is performed.

According to a twelfth aspect, a computer program product is provided, including computer instructions, where when the computer instructions are run on a computer, the communication method according to any one of the first aspect and the possible implementations of the first aspect is performed.

According to a thirteenth aspect, a computer program product is provided, including computer instructions, where when the computer instructions are run on a computer, the communication method according to any one of the second aspect and the possible implementations of the second aspect is performed.

### BRIEF DESCRIPTION OF DRAWINGS

FIG. 1 is a schematic diagram of a communication system to which a communication method is applicable according to an embodiment of this application;
FIG. 2 is a schematic interaction diagram of a communication method according to an embodiment of this application;
FIG. 3 is a schematic diagram of a CSI report configuration according to an embodiment of this application;
FIG. 4 is a schematic diagram of a CSI report group configuration according to an embodiment of this application;
FIG. 5 is a schematic diagram of another CSI report group configuration according to an embodiment of this application;
FIG. 6 is a schematic diagram of activating a proportion set according to an embodiment of this application;
FIG. 7 is a schematic interaction diagram of another communication method according to an embodiment of this application;
FIG. 8 is a schematic interaction diagram of another communication method according to an embodiment of this application;
FIG. 9 is a schematic interaction diagram of another communication method according to an embodiment of this application;
FIG. 10 is a schematic block diagram of a communication apparatus according to an embodiment of this application; and
FIG. 11 is a schematic block diagram of another communication apparatus according to an embodiment of this application.

### DESCRIPTION OF EMBODIMENTS

The following describes technical solutions in embodiments of this application with reference to accompanying drawings.

The technical solutions in embodiments of this application may be used in various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network and a future communication network, a terminal device in a future evolved public land mobile network (public land mobile network, PLMN), or the like. This is not limited in embodiments of this application. The terminal device may be a mobile phone (mobile phone), a tablet computer (Pad), a computer having a wireless sending and receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application.

A network device in embodiments of this application may be a device configured to communicate with a terminal device. The network device may be a base transceiver station (base transceiver station, BTS) in a global system for mobile communications (global system for mobile communications, GSM) system or a code division multiple access (code division multiple access, CDMA) system, may be a base station (NodeB, NB) in a wideband code division multiple access (Wideband Code Division Multiple Access, WCDMA) system, may be an evolved base station (evolved NodeB, eNB or eNodeB) in an LTE system, may be a base station (Next Generation NodeB, gNB or gNodeB) in a 5th generation (5th generation, 5G) system or a new radio (new radio, NR) system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future communication network, a network device in a future evolved PLMN network, or the like. This is not limited in embodiments of this application.

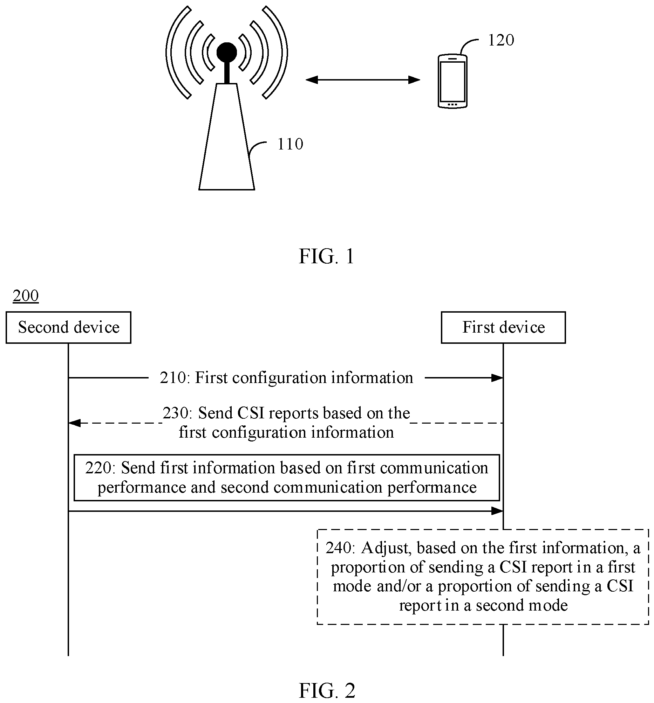

FIG. 1 is a schematic diagram of a communication system to which a communication method is applicable according to an embodiment of this application. As shown in FIG. 1, the communication system may include a network device 110 and a terminal device 120.

The network device 110 and the terminal device 120 may be deployed on the land, including an indoor device, an outdoor device, a handheld device, or a vehicle-mounted device, may be deployed on the water, or may be deployed on an airplane, a balloon, and a satellite in the air. An application scenario of the network device and the terminal device is not limited in embodiments of this application.

It should be understood that there may be one or more terminal devices 120. This is not limited in embodiments of this application.

The terminal device 120 may communicate with the network device 110 in a wireless manner.

For example, the terminal device 120 encodes channel state information (channel state information, CSI) by using an encoder, and then sends encoded channel state information to the network device 110.

With development of AI technologies, an AI module may be used to replace some conventional functional modules in a wireless communication system. However, the AI technology is driven by data, and performance of the AI module is closely related to the data. Therefore, when a feature of the data differs greatly from a feature of AI training data, or when the data is not distributed in a same manner as the training data, the performance of the AI module may be poor. Therefore, after the AI module is introduced into the wireless communication system, the performance of the AI module needs to be monitored.

For example, when sending CSI reports to a network device, a terminal device uses an AI-based encoder (AI encoder) to replace a codebook-based encoder (codebook encoder), that is, the terminal device uses the AI encoder to encode the CSI and feeds back encoded CSI to the network device. The network device decodes the CSI by using a corresponding AI-based decoder (AI decoder) to obtain the CSI. In this process, performance of the AI encoder and performance of the AI decoder need to be monitored.

For how to monitor the performance of the AI encoder, a solution is as follows: The terminal device sends original CSI (or high-fidelity CSI) to the network device, so that the network device performs comparison and analysis on CSI obtained by decoding the CSI by using the AI decoder and the original CSI. Therefore, performance of using the AI encoder and the AI decoder can be evaluated and monitored. However, an objective of encoding the CSI by the terminal device and then transmitting the encoded CSI to the network device is to reduce overheads. If the original CSI is sent to the network device at the same time, although the performance of the AI module can be monitored, overheads are greatly increased.

Another solution is as follows: The network device sends the AI decoder to the terminal device, and the terminal device decodes the CSI encoded by the AI encoder, so that the performance of the AI encoder and the performance of the AI decoder can be monitored. However, AI decoding is generally complex, and decoding the CSI by the terminal device by using the AI decoder brings additional computing complexity and power consumption to the terminal device.

In view of this, embodiments of this application provide a communication method and a communication apparatus, to monitor performance of an AI module in a wireless communication system with fewer overheads.

The following describes in detail the communication method and the communication apparatus provided in embodiments of this application with reference to FIG. 2 to FIG. 11.

FIG. 2 is a schematic interaction diagram of a communication method according to an embodiment of this application. As shown in FIG. 2, a communication method 200 may include steps 210 and 220.

210: A second device sends first configuration information to a first device, where the first configuration information indicates the first device to send channel state information CSI reports in a hybrid mode of a first mode and a second mode. Correspondingly, the first device receives the first configuration information sent by the second device.

For example, the first configuration information indicates the first device to send the CSI reports in the first mode and the second mode alternately. For example, the first device first sends a CSI report in the first mode, then sends a CSI report in the second mode, and then sends a CSI report in the first mode, and the rest may be deduced by analogy. Alternatively, the first configuration information indicates the first device to send the CSI reports in the first mode and the second mode according to specific proportions. For example, a proportion of sending the CSI report by the first device in the first mode is 20%, and a proportion of sending the CSI report by the first device in the second mode is 80%.

For example, the first configuration information may be carried in a radio resource control (radio resource control, RRC) message, that is, the second device may send the first configuration information to the first device by using the RRC message.

The first mode may be an AI-based CSI report feedback mode, and the second mode may be a codebook-based CSI report feedback mode. It should be understood that the first mode or the second mode may alternatively be another mode in which a CSI report can be fed back.

It should be understood that, in this embodiment of this application, the second device may be the network device shown in FIG. 1, the first device may be the terminal device shown in FIG. 1, and there may be one or more terminal devices.

220: The second device sends first information to the first device based on first communication performance and second communication performance, where the first information indicates the first device to adjust the proportion of sending the CSI report in the first mode and/or the proportion of sending the CSI report in the second mode, the first communication performance is communication performance of communicating with the first device by the second device based on the CSI report sent by the first device in the first mode, and the second communication performance is communication performance of communicating with the first device by the second device based on the CSI report sent by the first device in the second mode. Correspondingly, the first device receives the first information sent by the second device.

It should be understood that the first communication performance is the communication performance of communicating with the first device by the second device based on the CSI report sent by the first device in the first mode, namely, downlink communication performance in the first mode.

Specifically, the second device sends the first configuration information to the first device, and the first device sends the CSI report to the second device in the first mode based on the first configuration information. In this case, the communication performance of communicating with the first device by the second device based on the CSI report is the first communication performance.

Similarly, the second device sends the first configuration information to the first device, and the first device sends the CSI report to the second device in the second mode based on the first configuration information. In this case, the communication performance of communicating with the first device by the second device based on the CSI report is the second communication performance, namely, downlink communication performance in the second mode.

It should be understood that the first communication performance and the second communication performance may be evaluated by the second device (for example, the network device), or may be evaluated by the first device (for example, the terminal device).

When the first communication performance is evaluated by the first device, before the second device sends the first information to the first device based on the first communication performance and the second communication performance, the method further includes:

The first device sends second information to the second device. Correspondingly, the second device receives the second information sent by the first device. The second information includes the first communication performance and the second communication performance, or the second information includes a comparison result between the first communication performance and the second communication performance.

It may be understood that when the second information includes the comparison result between the first communication performance and the second communication performance, that the second device sends first information to the first device based on first communication performance and second communication performance in step 220 may also be understood as: The second device sends the first information to the first device based on the comparison result between the first communication performance and the second communication performance.

In some other embodiments, the second information sent by the first device may alternatively include an adjustment request, and the adjustment request is used to request to adjust the proportion of sending the CSI report by the first device in the first mode and/or the proportion of sending the CSI report by the first device in the second mode. In this case, the second device may send the first information to the first device based on the adjustment request.

Optionally, the first configuration information may further include one or more of the following information: an evaluation indication, indicating the first device to evaluate the first communication performance and the second communication performance; an evaluation indicator, indicating the first device to evaluate the first communication performance and the second communication performance based on the evaluation indicator; or evaluation duration, indicating duration in which the first device evaluates the first communication performance and the second communication performance.

In a possible implementation, the second device sends the first information to the first device based on the first communication performance and the second communication performance, and the first information indicates the first device to adjust the proportion of sending the CSI report in the first mode.

In another possible implementation, the second device sends the first information to the first device based on the first communication performance and the second communication performance, and the first information indicates the first device to adjust the proportion of sending the CSI report in the second mode.

In still another possible implementation, the second device sends the first information to the first device based on the first communication performance and the second communication performance, and the first information indicates the first device to adjust the proportion of sending the CSI report in the first mode and the proportion of sending the CSI report in the second mode.

In some embodiments, if the first communication performance is higher than the second communication performance, the first information indicates the first device to increase the proportion of the first mode (namely, the proportion of sending the CSI report by the first device in the first mode) and decrease the proportion of the second mode (namely, the proportion of sending the CSI report by the first device in the second mode); or
if the first communication performance is lower than the second communication performance, the first information indicates the first device to decrease the proportion of the first mode and increase the proportion of the second mode.

Optionally, before the second device sends the first information to the first device based on the first communication performance and the second communication performance, the method further includes step 230.

230: The first device sends the CSI reports to the second device based on the first configuration information.

For example, the first device may send the CSI reports in the first mode and the second mode based on the first configuration information.

Optionally, before the second device sends the first information to the first device based on the first communication performance and the second communication performance, the method further includes:

The second device sends a second activation message to the first device, where the second activation message is used to activate a target configuration in the first configuration information.

It should be understood that the second activation message may be a medium access control control element (medium access control control element, MAC CE) message or a downlink control information (Downlink Control Information, DCI) message.

It may be understood that a process in which the second device sends the second activation message to the first device may be performed before step 230. Correspondingly, the first device receives the second activation message, and may send the CSI reports to the second device based on the target configuration activated by using the second activation message.

In this embodiment of this application, the first configuration information includes at least one proportion set list, each of the at least one proportion set list includes at least one proportion set, and each proportion set provides a group of a possible value of N, a possible value of K, or possible distribution indication information. N is a quantity of CSI reports sent by the first device, K is a quantity of CSI reports sent by the first device in the first mode, N is a positive integer, and K is an integer greater than or equal to 0 and less than or equal to N. The distribution indication information indicates distribution of the CSI report sent by the first device in the first mode and/or distribution of the CSI report sent by the first device in the second mode.

It should be understood that the distribution indication information may indicate location distribution of the K CSI reports in the first mode in the N CSI reports, may indicate distribution of N-K CSI reports in the second mode in the N CSI reports, or may indicate distribution of the CSI report in the first mode and the CSI report in the second mode in the N CSI reports. Alternatively, the distribution indication information may indicate a distribution pattern (pattern), and in the distribution pattern, the CSI report in the first mode and the CSI report in the second mode are correspondingly distributed in the N CSI reports. For example, the distribution indication information is a bitmap (bitmap).

All possible values of N, all possible values of K, and all possible distribution indication information that are configured by the second device for the first device are described by the at least one proportion set list. The activating the target configuration in the first configuration information includes enabling one proportion set in one proportion set list, where the proportion set corresponds to a group of a value of N, a value of K, and distribution indication information.

It should be understood that the proportion set list may also be referred to as a rate set list, a ratio set list, or the like.

Optionally, the first configuration information may indicate a first CSI report configuration used by the first device to send the CSI reports, the first CSI report configuration indicates the first device to send N CSI reports to the second device, and N is a positive integer. Under the first CSI report configuration, the quantity of CSI reports sent by the first device in the first mode is K, the quantity of CSI reports sent by the first device in the second mode is N-K, and K is an integer greater than or equal to 0 and less than or equal to N.

Specifically, the first CSI report configuration may indicate that the first device works in a hybrid mode of the first mode and the second mode when sending the N CSI reports to the second device. The hybrid mode means that when the first device sends the CSI reports to the second device, some CSI reports are sent in the first mode, and some CSI reports are sent in the second mode. The proportions and distribution of the first mode and the second mode may be determined based on N, K, and the distribution indication information.

In the technical solution, N, K, and the distribution indication information are all included in the proportion set list. In another possible implementation solution, N is determined based on the first CSI report configuration, and a possible value of K and the possible distribution indication information are included in the proportion set list; or K is determined based on the first CSI report configuration, and a possible value of N and the possible distribution indication information are included in the proportion set list. In a third possible implementation solution, one or more of N, K, or the distribution indication information are agreed upon by the first device and the second device in advance, and other information is included in the proportion set list. In a fourth possible implementation solution, the first CSI report configuration includes a group of N, K, and distribution indication information, and more possible values of N, more possible values of K, or more possible distribution indication information are included in the proportion set list. Another possible implementation solution is a combination of the foregoing four implementation solutions. In all the solutions, the first device and the second device have learned of a group of determined N, K, and distribution indication information before starting to send the CSI reports when working in the hybrid mode.

Optionally, the proportion set list may be included in the first CSI report configuration.

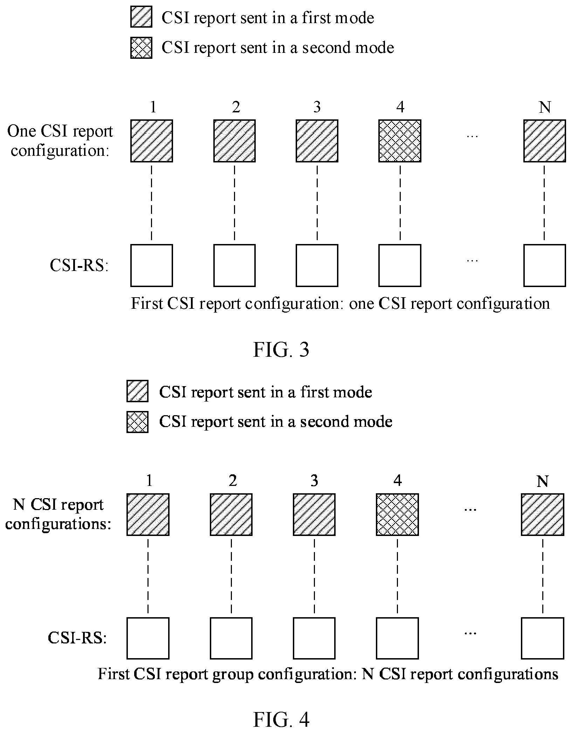

For example, FIG. 3 is a schematic diagram of a CSI report configuration according to an embodiment of this application. As shown in FIG. 3, the first CSI report configuration indicates the first device to send the N CSI reports to the second device after obtaining CSI reports based on measurement of a CSI reference signal (CSI reference signal, CSI-RS). In the N CSI reports, a quantity of CSI reports sent by the first device in the first mode is K, and a quantity of CSI reports sent by the first device in the second mode is N-K.

For example, if N is 5 and K is 1, the quantity of CSI reports sent by the first device in the first mode is 1, and the quantity of CSI reports sent by the first device in the second mode is 4. In this case, the first CSI report configuration indicates the first device to send five CSI reports to the second device.

In some embodiments, the first CSI report configuration further indicates the first device to periodically send a plurality of groups of N CSI reports.

In the technical solution, the first device periodically sends the CSI reports. To be specific, after it is configured through the first CSI report configuration to periodically send the CSI reports, the configuration takes effect immediately. In this case, the first device periodically sends the CSI reports to the second device by using a group of N CSI reports as a basic cyclic unit, and keeps sending until new configuration information is received. In this process, the first CSI report configuration needs to include a group of a value of N, a value of K, or distribution indication information, and other more possible values of N, other more possible values of K, or other more possible distribution indication information are included in the proportion set list. In a process in which the first device sends the CSI reports, the second device may activate another proportion set in the proportion set list by using a MAC CE message or a DCI message, and the another proportion set corresponds to another group of a value of N, a value of K, or distribution indication information, to change the proportion and/or the distribution of the first mode and/or the second mode in the N CSI reports sent by the first device.

Optionally, the first CSI report configuration further indicates the first device to semi-persistently send a plurality of groups of N CSI reports.

In the technical solution, the first device semi-persistently sends the CSI reports. To be specific, after it is configured through the first CSI report configuration to persistently send the CSI reports, CSI reporting needs to be activated or triggered by using a MAC CE message or a DCI message. When the CSI reporting is activated or triggered by using the MAC CE message or the DCI message, a proportion set in the proportion set list may be activated, to obtain a group of a value of N, a value of K, or distribution indication information. Then, the first device continuously and periodically sends the CSI reports to the second device by using a group of N CSI reports as a basic cyclic unit, and using the learned N, K, and distribution indication information, until a new message is received to terminate sending of the CSI report or until a configuration of the CSI report is modified. In a process in which the first device sends the CSI reports, the second device may activate another proportion set in the proportion set list by using a MAC CE message or a DCI message, and the another proportion set corresponds to another group of a value of N, a value of K, or distribution indication information, to change the proportion and/or the distribution of the first mode and/or the second mode in the N CSI reports sent by the first device.

Optionally, the first CSI report configuration further indicates the first device to aperiodically send the CSI reports.

In the technical solution, the first device aperiodically sends the CSI reports. To be specific, after it is configured through the first CSI report configuration to aperiodically send the CSI reports, CSI reporting needs to be activated or triggered by using a MAC CE message or a DCI message. When the CSI reporting is activated or triggered by using the MAC CE message or the DCI message, a proportion set in the proportion set list may be activated, to obtain a value of N, a value of K, or distribution indication information. Then, the first device sends at least one group of N CSI reports to the second device based on the first CSI report configuration, and automatically stops after the sending is completed.

In the foregoing embodiments, the CSI report may be carried on a physical uplink control channel (physical uplink control channel, PUCCH) or a physical uplink shared channel (physical uplink shared channel, PUSCH).

It should be understood that, for N CSI reports included in each of the plurality of groups of N CSI reports, before the configuration is changed, the quantity of CSI reports sent by the first device in the first mode is unchanged, and the distribution of the first mode is also unchanged; and the quantity of CSI reports sent by the first device in the second mode is unchanged, and the distribution of the second mode is also unchanged.

Optionally, the first configuration information indicates a first CSI report group configuration used by the first device to send the CSI reports. The first CSI report group configuration includes N second CSI report configurations, N is a positive integer, and each second CSI report configuration indicates one CSI report of the first device. A quantity of CSI reports sent by the first device in the first mode is K, a quantity of CSI reports sent by the first device in the second mode is N-K, and K is an integer greater than or equal to 0 and less than or equal to N.

In the technical solution, possible values of N, possible values of K, and possible distribution indication information are all included in the proportion set list. In another possible implementation solution, N is determined based on the first CSI report group configuration, and a possible value of K and the possible distribution indication information are included in the proportion set list; or K is determined based on the first CSI report group configuration, and a possible value of N and the possible distribution indication information are included in the proportion set list. In a third possible implementation solution, one or more of N, K, or the distribution indication information are agreed upon by the first device and the second device in advance, and other information is included in the proportion set list. In a fourth possible implementation solution, the first CSI report group configuration includes a group of N, K, and distribution indication information, and more possible values of N, more possible values of K, or more possible distribution indication information are included in the proportion set list. Another possible implementation solution is a combination of the foregoing four implementation solutions. In all the solutions, the first device and the second device have learned of a group of determined N, K, and distribution indication information before starting to send the CSI reports when working in the hybrid mode.

Optionally, the proportion set list may be included in the first CSI report group configuration. For example, FIG. 4 is a schematic diagram of a CSI report group configuration according to an embodiment of this application. As shown in FIG. 4, the first configuration information indicates a first CSI report group configuration, the first CSI report group configuration indicates N second CSI report configurations, and one second CSI report configuration indicates the first device to send one CSI report to the second device after obtaining CSI reports based on measurement of a CSI-RS. In the N CSI reports corresponding to the N second CSI report configurations, a quantity of CSI reports sent by the first device in the first mode is K, and a quantity of CSI reports sent by the first device in the second mode is N-K.

For example, if N is 5 and K is 1, the quantity of CSI reports sent by the first device in the first mode is 1, and the quantity of CSI reports sent by the first device in the second mode is 4. In this case, the first CSI report group configuration includes five second CSI report configurations, and the five second CSI report configurations indicate the first device to send five CSI reports to the second device.

In some embodiments, the first CSI report group configuration or the second CSI report configuration further indicates the first device to periodically send CSI reports.

Optionally, the first CSI report group configuration or the second CSI report configuration further indicates the first device to semi-persistently send CSI reports.

Optionally, the first CSI report group configuration or the second CSI report configuration further indicates the first device to aperiodically send CSI reports.

For related descriptions of indicating the first device to periodically send the CSI reports by the first CSI report group configuration or the second CSI report configuration, indicating the first device to semi-persistently send the CSI reports, or indicating the first device to aperiodically send the CSI reports, refer to the related description in which the first CSI report configuration indicates the first device to send the CSI reports in the foregoing embodiment. Details are not described herein again.

Optionally, the first configuration information indicates a second CSI report group configuration used by the first device to send the CSI reports, the second CSI report group configuration includes two third CSI report configurations, one of the two third CSI report configurations indicates the first device to send the CSI report in the first mode, and the other of the two third CSI report configurations indicates the first device to send the CSI report in the second mode.

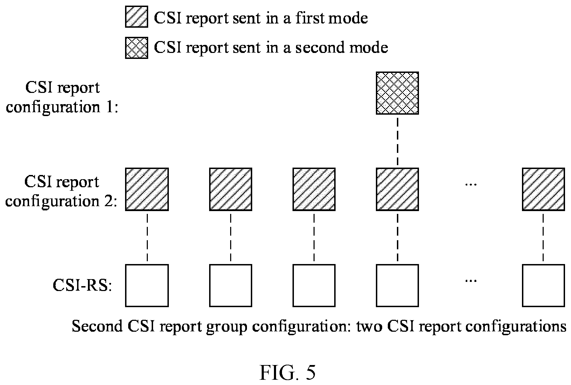

For example, FIG. 5 is a schematic diagram of another CSI report group configuration according to an embodiment of this application. As shown in FIG. 5, the first configuration information may indicate a second CSI report group configuration, and the second CSI report group configuration may indicate a CSI report configuration 1 and a CSI report configuration 2. The CSI report configuration 2 indicates the first device to send the CSI report in the first mode, and the CSI report configuration 1 indicates the first device to send the CSI report in the second mode.

In an example, when the first device sends the CSI reports based on the CSI report configuration 1 and the CSI report configuration 2, two CSI reports may overlap, and the first device needs to separately obtain the CSI reports in the first mode and the second mode based on a same CSI-RS. In this case, the two CSI reports obtained by the first device may be both sent to the second device, or one CSI report may be selected from the two CSI reports and sent to the second device. A possible selection basis is as follows: comparing channel quality indicator (channel quality indicator, CQI) values obtained based on the two CSI reports, and sending a CSI report corresponding to a higher CQI value to the second device.

In some embodiments, a periodicity in which the first device sends the CSI report in the first mode is N*T/K, and a periodicity in which the first device sends the CSI report in the second mode is T. N is a positive integer, K is a natural number, and the first device does not send the CSI report in the first mode when K is equal to 0.

In the technical solution, possible values of N, possible values of K, and possible distribution indication information are all included in the proportion set list. In another possible implementation solution, N is determined based on the second CSI report group configuration, and a possible value of K and the possible distribution indication information are included in the proportion set list; or K is determined based on the second CSI report group configuration, and a possible value of N and the possible distribution indication information are included in the proportion set list. In a third possible implementation solution, one or more of N, K, or the distribution indication information are agreed upon by the first device and the second device in advance, and other information is included in the proportion set list. In a fourth possible implementation solution, the second CSI report group configuration includes a group of N, K, and distribution indication information, and more possible values of N, more possible values of K, or more possible distribution indication information are included in the proportion set list. Another possible implementation solution is a combination of the foregoing four implementation solutions. In all the solutions, the first device and the second device have learned of a group of determined N, K, and distribution indication information before starting to send the CSI reports when working in the hybrid mode.

Optionally, the proportion set list may be included in the second CSI report group configuration.

In this embodiment of this application, that the first device does not send the CSI report in the first mode when K is 0 means that all CSI reports sent by the first device are sent in the second mode. For example, the first device uses only the codebook-based CSI report feedback mode, and does not use the artificial intelligence AI-based CSI report feedback mode.

In some embodiments, the second CSI report group configuration or the third CSI report configuration further indicates the first device to periodically send CSI reports.

Optionally, the second CSI report group configuration or the third CSI report configuration further indicates the first device to semi-persistently send CSI reports.

Optionally, the second CSI report group configuration or the third CSI report configuration further indicates the first device to aperiodically send CSI reports.

For related descriptions of indicating the first device to periodically send the CSI reports by the second CSI report group configuration or the third CSI report configuration, indicating the first device to semi-persistently send the CSI reports, or indicating the first device to aperiodically send the CSI reports, refer to the related description in which the first CSI report configuration indicates the first device to send the CSI reports in the foregoing embodiment. For brevity, details are not described herein again.

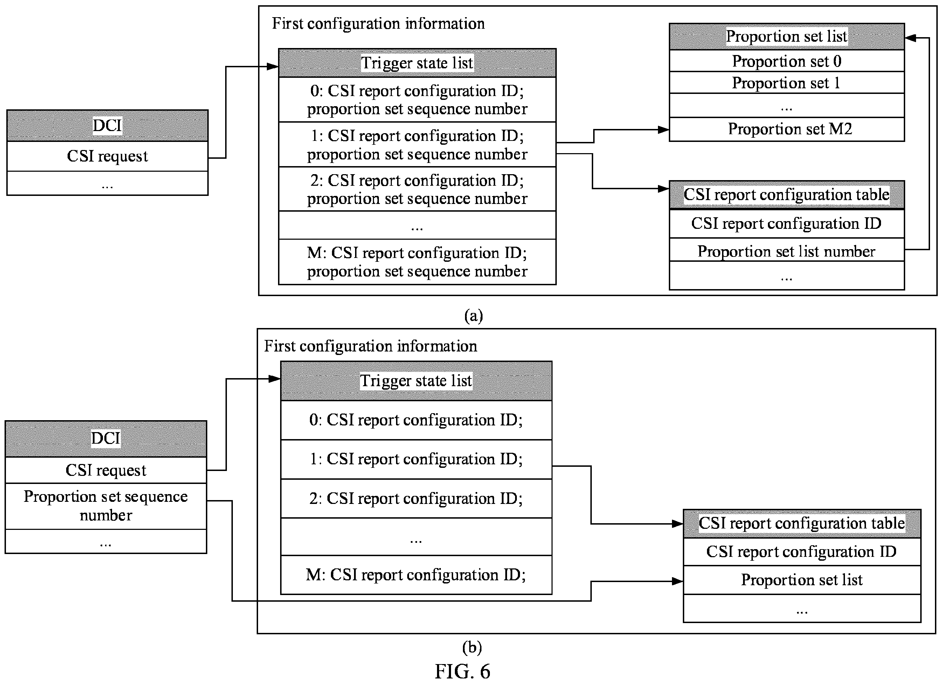

The following describes technical solutions for configuring a CSI report by using the first configuration information in an embodiment of this application with reference to FIG. 6. FIG. 6 is a schematic diagram of activating a proportion set according to an embodiment of this application.

Solution 1: As shown in (a) in FIG. 6, the first configuration message includes at least a trigger state list (TriggerStateList), at least one CSI report configuration table (CSI-ReportConfig), and at least one proportion set list (RatioSetList). A group of content in the trigger state list includes a CSI report configuration identifier (or referred to as a CSI report configuration index) and a proportion set sequence number. Each of the at least one CSI report configuration table includes a CSI report configuration identifier and a proportion set list number. One group of content in the trigger state list is associated with one CSI report configuration table based on the CSI report configuration identifier, and the CSI report configuration table is associated with one proportion set list based on the proportion set list number. To be specific, based on the group of content in the trigger state list, the CSI report configuration table may be located based on the CSI report configuration identifier, the corresponding proportion set list may be located based on the proportion set list number in the CSI report configuration table, and then a group of specific proportion sets may be located based on the proportion set list and a proportion set sequence number in the group of content in the trigger state list.

Optionally, the proportion set list may alternatively be included in a CSI report configuration table corresponding to the proportion set list. To be specific, after the CSI report configuration table is located, the proportion set list in the CSI report configuration table may be obtained. In this case, the first configuration message includes at least two lists or tables: a trigger state list and at least one CSI report configuration table.

Optionally, the at least one proportion set list may be agreed upon in advance, for example, standardized, and may be learned by the first device and the second device in advance. Another process is similar. Details are not described herein again.

Solution 2: As shown in (b) in FIG. 6, the first configuration message includes at least a trigger state list and at least one CSI report configuration table. A group of content in the trigger state list includes a CSI report configuration identifier. Each of the at least one CSI report configuration table includes a CSI report configuration identifier and a proportion set list. One group of content in the trigger state list is associated with one CSI report configuration table based on the CSI report configuration identifier. To be specific, based on the group of content in the trigger state list, the CSI report configuration table may be located based on the CSI report configuration identifier, and the proportion set list in the CSI report configuration table may be obtained.

Optionally, the proportion set list may alternatively exist independently, instead of being included in the CSI report configuration table. In this case, the first configuration message includes at least three lists or tables: a trigger state list, at least one CSI report configuration table, and at least one proportion set list. Each of the at least one CSI report configuration table includes a CSI report configuration identifier and a proportion set list number, and one CSI report configuration table may be associated with one proportion set list based on the proportion set list number. To be specific, based on a group of content in the trigger state list, a CSI report configuration table may be located based on a CSI report configuration identifier, and a corresponding proportion set list may be located based on a proportion set list number in the CSI report configuration table.

Optionally, the proportion set list may also be agreed upon in advance, for example, standardized, and may be learned by the first device and the second device in advance. Another process is similar. Details are not described herein again.

Optionally, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

For example, when the proportion configuration information includes K, N and/or the distribution indication information are/is carried in the configuration information.

For example, when the proportion configuration information includes N, K and/or the distribution indication information are/is carried in the configuration information.

Optionally, when the proportion configuration information includes one or two of N, K, and the distribution indication information, other information needs to be indicated by another message or agreed upon in advance.

For example, when the proportion configuration information includes N and K, the distribution indication information may be predefined. For example, the distribution indication information is preset by the first device and the second device in advance.

For example, when the proportion configuration information includes K and the distribution indication information, N may be predefined, or may be indicated by other information.

Optionally, the first information is a first activation message, and the first activation message is used to activate a proportion set in the proportion set list; and N, K, and the distribution indication information are used to implement the first CSI report configuration; N, K, and the distribution indication information are used to implement the first CSI report group configuration; or N, K, and the distribution indication information are used to implement the second CSI report group configuration. The first activation message may be a MAC CE message, or may be a DCI message.

For example, the first device originally sends the CSI report by using a configuration in a proportion set 1 based on the configuration information of the second device, and the second device sends the DCI message to the first device based on the first communication performance and the second communication performance. The DCI message indicates the first device to send the CSI report based on a configuration in a proportion set 2. For example, N, K, and distribution indication information in the proportion set 2 are used to implement the foregoing first CSI report configuration, first CSI report group configuration, or second CSI report group configuration.

In a possible implementation, after receiving the first information, the first device adjusts, based on the first information, the proportion of sending the CSI report in the first mode and/or the proportion of sending the CSI report in the second mode.

Optionally, as shown in FIG. 2, the method may further include step 240.

240: The first device adjusts, based on the first information, the proportion of sending the CSI report by the first device in the first mode and/or the proportion of sending the CSI report by the first device in the second mode.

For example, based on the first information, the first device increases the proportion of sending the CSI report by the first device in the first mode and decreases the proportion of sending the CSI report by the first device in the second mode.

For example, based on the first information, the first device decreases the proportion of sending the CSI report by the first device in the first mode and increases the proportion of sending the CSI report by the first device in the second mode.

In some embodiments, if the first communication performance is higher than the second communication performance, based on the first information, the first device may increase the proportion of the first mode and decrease the proportion of the second mode; or
if the first communication performance is lower than the second communication performance, based on the first information, the first device may decrease the proportion of the first mode and increase the proportion of the second mode.

That the first device adjusts, based on the first information, the proportion of sending the CSI report in the first mode and/or the proportion of sending the CSI report in the second mode may be performed in the following several manners.

### Manner 1

In some embodiments, that the first device adjusts, based on the first information, the proportion of sending the CSI report by the first device in the first mode and/or the proportion of sending the CSI report by the first device in the second mode includes the following steps:
determining, based on the first activation message, a CSI report configuration identifier and a proportion set sequence number that are in a trigger state list;
determining a CSI report configuration table based on the CSI report configuration identifier;
determining a proportion set list based on the CSI report configuration table; and
determining and activating a proportion set in the proportion set list based on the proportion set list and the proportion set sequence number.

For example, refer to (a) in FIG. 6. The first configuration information may include the trigger state list, the at least one proportion set list, the at least one CSI report configuration table, and the like. The trigger state list may include a plurality of groups of CSI report configuration identifiers (CSI-reportconfigIDs) and proportion set (ratioset) sequence numbers. Each of the at least one proportion set list may include a plurality of groups of proportion sets, where each group of proportion sets may include one group of N, K, and distribution indication information. Each of the at least one CSI report configuration table may include a CSI report configuration identifier, a proportion set list number, and the like.

It should be understood that the group of proportion sets may alternatively include one or more of N, K, and the distribution indication information. For details, refer to the foregoing description. Details are not described herein again.

The first activation message may be a DCI message. The DCI message may include a CSI request (CSI request), and a value of the CSI request is associated with one corresponding group in the trigger state list. The first device may locate a CSI report configuration table based on a CSI report configuration identifier in the group, may locate a corresponding proportion set list based on a proportion set list number in the CSI report configuration table, and may locate a group of specific proportion sets in the proportion set list, for example, an M2^{th} group of proportion sets, based on the proportion set list and a proportion set sequence number in the group in the trigger state list. In this embodiment of this application, activating a group of proportion sets means enabling a value of N, a value of K, and distribution in the group of proportion sets, so that the first device may send the CSI report based on N, K, and the distribution.

It should be understood that, in some embodiments, the first activation message may alternatively be a MAC CE message. For a process of activating the proportion set by using the first activation message, refer to the foregoing description. For brevity, details are not described again.

In some embodiments, when the first activation message is the MAC CE message, the MAC CE message may also directly carry a group of N, K, and distribution indication information. Therefore, after receiving the MAC CE message, the first device may send the CSI report based on N, K, and the distribution indication information. In the technical solution, the first device can quickly perform adjustment, thereby improving efficiency of adjusting CSI reports transmitted in different modes. It should be understood that the MAC CE message may alternatively carry only one or more of N, K, and the distribution indication information, and other information uses a configuration that is agreed upon in advance or is being used.

### Manner 2

In some other embodiments, that the first device adjusts, based on the first information, the proportion of sending the CSI report by the first device in the first mode and/or the proportion of sending the CSI report by the first device in the second mode includes the following steps:
determining a CSI report configuration identifier in a trigger state list based on the first activation message;
determining a CSI report configuration table based on the CSI report configuration identifier;
determining a proportion set list based on the CSI report configuration table; and
determining and activating a proportion set in the proportion set list based on the proportion set list and a proportion set sequence number in the first activation message.

For example, refer to (b) in FIG. 6. The first configuration information may include the trigger state list and the at least one CSI report configuration table. The trigger state list may include a plurality of groups of CSI report configuration identifiers. Each of the at least one CSI report configuration table may include a CSI report configuration identifier, a proportion set list, and the like.

The first activation message may be a DCI message. The DCI message may include a CSI request, and a value of the DCI request is associated with one corresponding group in the trigger state list. The first device may locate a CSI report configuration table based on a CSI report configuration identifier in the group in the trigger state list. The CSI report configuration table includes a proportion set list, and a group of specific proportion sets in the proportion set list may be located based on the proportion set list and the proportion set sequence number included in the DCI message. In this embodiment of this application, activating a group of proportion sets means enabling a value of N, a value of K, and distribution in the group of proportion sets, so that the first device may send the CSI report based on N, K, and the distribution.

It should be understood that the group of proportion sets may alternatively include one or more of N, K, and the distribution indication information. For details, refer to the foregoing description. Details are not described herein again.

It should be understood that the proportion set sequence number is information newly added to the DCI message, and may be obtained by modifying the DCI message.

In the foregoing manner 1, if the proportion set list is included in the corresponding CSI report configuration table, or in the foregoing manner 2, if the proportion set list exists independently instead of being included in the corresponding CSI report configuration table, the foregoing manner 1 and manner 2 may refer to each other, to implement an action of activating a group of proportion sets by using a DCI message. Details are not described herein again.

It should be understood that, in some embodiments, the first activation message may alternatively be a MAC CE message. For a process of activating the proportion set by using the first activation message, refer to the foregoing description. For brevity, details are not described again.

In some embodiments, when the first activation message is the MAC CE message, the MAC CE message may also directly carry a group of N, K, and distribution indication information. Therefore, after receiving the MAC CE message, the first device may send the CSI report based on N, K, and the distribution indication information. In the technical solution, the first device can quickly perform adjustment, thereby improving efficiency of adjusting CSI reports sent in different modes. It should be understood that the MAC CE message may alternatively carry only one or more of N, K, and the distribution indication information, and other information uses a configuration that is agreed upon in advance or is being used.

### Manner 3

In some other embodiments, the first information may alternatively be second configuration information and the second activation message.

It should be understood that, in this case, the second configuration information and the second activation message are separately sent. To be specific, the second device first sends the second configuration information to the first device, and then sends the second activation message to the first device, to activate a proportion set in the second configuration information.

For example, the second configuration information may include different configuration solutions in the first configuration information. For example, if the second device updates the configuration information, the second device may send the second configuration information to the first device, and then send the second activation message. In this case, the first device may determine, based on the second activation message, a proportion set in the second configuration information, to send the CSI report based on obtained N, K, and distribution indication information.

It should be understood that for a specific process in which the first device determines the proportion set based on the second activation message, refer to the foregoing related description of determining the proportion set by the first device based on the first activation message. For brevity, details are not described again.

Based on this embodiment of this application, the second device sends the configuration information to the first device. The first device may send the CSI reports in the hybrid mode of the first mode and the second mode based on the configuration information sent by the second device. The second device may send the first information to the first device based on the first communication performance and the second communication performance, to indicate the first device to adjust, based on the first information, the proportion of sending the CSI reports in the first mode and/or the second mode. In the technical solution, performance of sending the CSI reports by the first device in the first mode and the second mode can be monitored with fewer overheads. Further, the CSI reports sent by the first device in the first mode and the second mode can be adjusted in a timely manner.

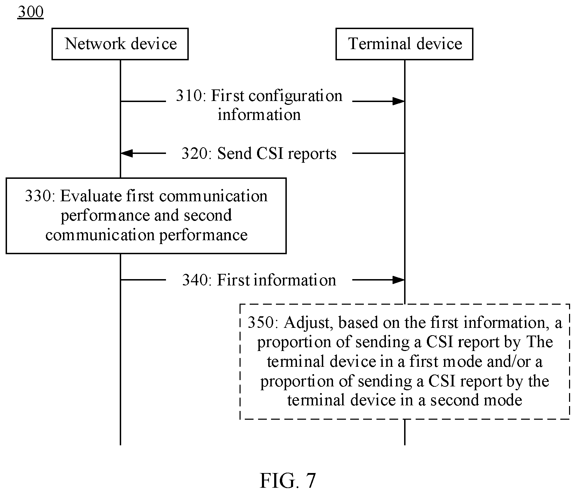

FIG. 7 is a schematic interaction diagram of a communication method according to an embodiment of this application. Interaction between a network device and a terminal device is used as an example. As shown in FIG. 7, the method 300 may include steps 310 to 340.

310: The network device sends first configuration information to the terminal device, where the first configuration information indicates the terminal device to send CSI reports in a hybrid mode of a first mode and a second mode.

It should be understood that, for step 310, refer to the related description of step 210. For brevity, details are not described again.

320: The terminal device sends the CSI reports to the network device based on the first configuration information.

330: The network device evaluates first communication performance and second communication performance.

The first communication performance is communication performance of communicating with the terminal device by the network device based on a CSI report sent by the terminal device in the first mode, and the second communication performance is communication performance of communicating with the terminal device by the network device based on a CSI report sent by the terminal device in the second mode.

It should be understood that the first communication performance and the second communication performance are downlink communication performance, that is, performance of communicating with the terminal device by the network device. For example, the network device may evaluate the first communication performance and the second communication performance based on an evaluation indicator. The evaluation indicator may be a system throughput rate, an ACK proportion or a NACK proportion, a CQI value, or the like.

For example, within evaluation duration, the network device separately calculates a CQI value based on the CSI reports sent by the terminal device in the two modes, or separately performs downlink communication based on the CSI reports sent by the terminal device in the two modes. In addition, in this process, the network device collects statistics about (or calculates) downlink communication throughput rates in the two modes, or an acknowledgement (acknowledgement, ACK) proportion or a negative acknowledgement (negative acknowledgment, NACK) proportion fed back by the terminal device to the network device for downlink communication. It may be understood that a higher CQI value indicates a higher communication throughput rate, a higher ACK proportion (or a lower NACK proportion), and better communication performance.

340: The network device sends first information to the terminal device based on the first communication performance and the second communication performance.

The first information indicates the terminal device to adjust a proportion of sending a CSI report in the first mode and/or a proportion of sending a CSI report in the second mode. In a possible implementation, a DCI message or a MAC CE message is used to activate another group of proportion sets.

In an example, the network device separately evaluates the first communication performance and the second communication performance based on the system throughput rate. If the first communication performance is higher than the second communication performance, the first information may indicate the terminal device to increase the proportion of sending the CSI report in the first mode and to decrease the proportion of sending the CSI report in the second mode. In a possible implementation solution, the first information includes DCI that is used to activate another group of proportion sets with a higher proportion of sending the CSI report in the first mode.

It should be understood that a threshold may be added to the communication performance when the first communication performance is compared with the second communication performance. For example, when a difference between the first communication performance and the second communication performance is greater than or equal to the threshold, it may be considered that the first communication performance is higher than the second communication performance.

In another example, the network device separately evaluates the first communication performance and the second communication performance based on the system throughput rate. If the first communication performance is lower than the second communication performance, the first information may indicate the terminal device to decrease the proportion of sending the CSI report in the first mode and to increase the proportion of sending the CSI report in the second mode.

Optionally, the method 300 may further include step 350.

350: The terminal device adjusts, based on the first information, the proportion of sending the CSI report by the terminal device in the first mode and/or the proportion of sending the CSI report by the terminal device in the second mode.

For example, if the first information indicates the terminal device to increase the proportion of sending the CSI report in the first mode and decrease the proportion of sending the CSI report in the second mode, based on the first information, the terminal device may increase the proportion of sending the CSI report in the first mode and decrease the proportion of sending the CSI report in the second mode.

Optionally, before step 320, the method may further include:

The network device sends a second activation message to the terminal device, where the second activation message is used to activate a target configuration in the first configuration information.

In some embodiments, that the terminal device sends the CSI reports to the network device based on the first configuration information includes:

The terminal device sends the CSI reports to the network device based on the target configuration.

For example, the target configuration may include a group of N, K, and distribution indication information. The terminal device may send the CSI report to the network device based on N, K, and the distribution indication information.

Optionally, the first configuration information indicates a first CSI report configuration used by the terminal device to send the CSI reports, the first CSI report configuration indicates the terminal device to send N CSI reports to the network device, and N is a positive integer. A quantity of CSI reports sent by the terminal device in the first mode is K, a quantity of CSI reports sent by the terminal device in the second mode is N-K, and K is an integer greater than or equal to 0 and less than or equal to N.

In some embodiments, the first CSI report configuration further indicates the terminal device to send a plurality of groups of N CSI reports.

For example, for the first CSI report configuration, refer to the foregoing related description of FIG. 3. For brevity, details are not described again.

Optionally, the first configuration information indicates a first CSI report group configuration used by the terminal device to send the CSI reports. The first CSI report group configuration includes N second CSI report configurations, N is a positive integer, and each second CSI report configuration indicates one CSI report of the terminal device. A quantity of CSI reports sent by the terminal device in the first mode is K, a quantity of CSI reports sent by the terminal device in the second mode is N-K, and K is an integer greater than or equal to 0 and less than or equal to N.

In some embodiments, each second CSI report configuration indicates the terminal device to send a plurality of CSI reports.

For example, for the first CSI report group configuration, refer to the foregoing related description of FIG. 4. For brevity, details are not described again.

Optionally, the first configuration information indicates a second CSI report group configuration used by the terminal device to send the CSI reports, the second CSI report group configuration includes two third CSI report configurations, one of the two third CSI report configurations indicates the terminal device to send the CSI report in the first mode, and the other of the two third CSI report configurations indicates the terminal device to send the CSI report in the second mode.

In some embodiments, a periodicity in which the terminal device sends CSI reports in the first mode is NT/K, and a periodicity in which the terminal device sends the CSI report in the second mode is T. N is a positive integer, K is a natural number, and the terminal device does not send the CSI report in the first mode when K is equal to 0.

For example, for the second CSI report group configuration, refer to the foregoing related description of FIG. 5. For brevity, details are not described again.

Optionally, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, the first information is a first activation message, and the first activation message is used to activate a proportion set in the proportion set list; and N, K, and the distribution indication information are used to implement the first CSI report configuration;
N, K, and the distribution indication information are used to implement the first CSI report group configuration; or
N, K, and the distribution indication information are used to implement the second CSI report group configuration.

It should be understood that, in this case, for a technical solution in which the terminal device adjusts, based on the first information, the proportion of sending the CSI report by the terminal device in the first mode and/or the proportion of sending the CSI report by the terminal device in the second mode, refer to the foregoing related descriptions of (a) and (b) in FIG. 6. For brevity, details are not described again.

It should be understood that the first activation message may be a MAC CE message or a DCI message.

In some embodiments, when the first activation message is the MAC CE message, the MAC CE message may also directly carry a group of N, K, and distribution indication information. Therefore, after receiving the MAC CE message, the terminal device may send the CSI report based on N, K, and the distribution indication information. In the technical solution, the terminal device can quickly perform adjustment, thereby improving efficiency of adjusting CSI reports transmitted in different modes. It should be understood that the MAC CE message may alternatively carry only one or more of N, K, and the distribution indication information, and other information uses a configuration that is agreed upon in advance or is being used.

In some embodiments, the foregoing target configuration may include the proportion set in the proportion set list.

Optionally, the first configuration information may be carried in an RRC message.

In this embodiment of this application, the first mode may be an artificial intelligence AI-based CSI report feedback mode, and the second mode may be a codebook-based CSI report feedback mode. It should be understood that the first mode and the second mode may alternatively be other CSI report feedback modes. This is not limited in embodiments of this application.

Based on this embodiment of this application, the network device may configure a hybrid working mode of the first mode and the second mode for the terminal device, the terminal device sends the CSI report based on the configuration information of the network device, and the network device evaluates the two types of communication performance, and sends, to the terminal device based on the evaluated communication performance, information that indicates the terminal device to adjust the proportion of sending the CSI reports in the first mode and the second mode. In the technical solution, performance in the two modes can be effectively monitored with low overheads. Further, a working mode of sending the CSI report by the terminal device can be adjusted in real time or in quasi-real time.

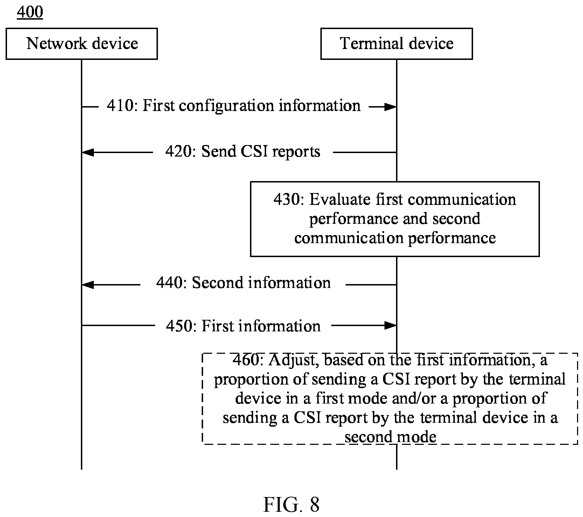

FIG. 8 is a schematic interaction diagram of another communication method according to an embodiment of this application. Interaction between a network device and a terminal device is used as an example. As shown in FIG. 8, the method 400 may include steps 410 to 450.

410: The network device sends first configuration information to the terminal device, where the first configuration information indicates the terminal device to send CSI reports in a hybrid mode of a first mode and a second mode.

It should be understood that for step 410, refer to the related description of step 210. For brevity, details are not described again.

420: The terminal device sends the CSI reports to the network device based on the first configuration information.

The terminal device sends the CSI reports to the network device based on specific configuration information in the first configuration information in the first mode and the second mode.

430: The terminal device evaluates first communication performance and second communication performance.

The first communication performance is communication performance of communicating with the terminal device by the network device based on the CSI report sent by the terminal device in the first mode, and the second communication performance is communication performance of communicating with the terminal device by the network device based on the CSI report sent by the terminal device in the second mode.

It should be understood that the first communication performance and the second communication performance are downlink communication performance. For example, the terminal device may evaluate the first communication performance and the second communication performance based on an evaluation indicator. The evaluation indicator may be a system throughput rate, an ACK proportion or a NACK proportion, a CQI value, or the like.

For example, the terminal device calculates, within evaluation duration based on the CSI report sent by the terminal device in the two modes, a system throughput rate, an ACK proportion or a NACK proportion, a CQI value, or the like of communicating with the terminal device by the network device. It may be understood that a higher CQI value indicates a higher communication throughput rate, a higher ACK proportion (or a lower NACK proportion), and better communication performance.

440: The terminal device sends second information to the network device, where the second information includes the first communication performance and the second communication performance, or the second information includes a comparison result between the first communication performance and the second communication performance.

In some embodiments, the second information may alternatively be an adjustment request message. The adjustment request message is used to request to adjust a proportion of sending a CSI report by the terminal device in the first mode and/or a proportion of sending a CSI report by the terminal device in the second mode.

For example, if the first communication performance is higher than the second communication performance, the terminal device may request, by using the adjustment request message, to increase the proportion of sending the CSI report in the first mode and decrease the proportion of sending the CSI report in the second mode.

In some other embodiments, the second information may include both the first communication performance and the second communication performance, or the comparison result between the first communication performance and the second communication performance, and may also include the adjustment request message.

450: The network device sends first information to the terminal device based on the first communication performance and the second communication performance.

The first information indicates the terminal device to adjust the proportion of sending the CSI report in the first mode and/or the proportion of sending the CSI report in the second mode.

In an example, if the network device determines that the first communication performance is higher than the second communication performance, the first information may indicate the terminal device to increase the proportion of sending the CSI report in the first mode and decrease the proportion of sending the CSI report in the second mode.

In an example, if the network device determines that the first communication performance is lower than the second communication performance, the first information may indicate the terminal device to decrease the proportion of sending the CSI report in the first mode and increase the proportion of sending the CSI report in the second mode.

In another example, if the second information is the comparison result between the first communication performance and the second communication performance, the network device may send the first information to the terminal device based on the comparison result.

In another example, if the second information is the adjustment request message, the network device may send the first information to the terminal device based on the adjustment request message.

In another example, after evaluating the first communication performance and the second communication performance, the terminal device may automatically adjust the proportion of sending the CSI report in the first mode and/or the proportion of sending the CSI report in the second mode. In this case, when feeding back the CSI report, the terminal device may notify the network device that a working mode has changed.

For example, at a moment, the terminal device needs to originally send a CSI report in the first mode, but the terminal device sends the CSI report in the second mode at this moment based on an evaluation result. In this case, when sending the CSI report, the terminal device may indicate that the mode of sending the CSI report has changed. Optionally, the terminal device may further send the first communication performance and the second communication performance to the network device when sending the CSI report.

Optionally, the method 400 may further include step 460.

460: The terminal device adjusts, based on the first information, the proportion of sending the CSI report by the terminal device in the first mode and/or the proportion of sending the CSI report by the terminal device in the second mode.

For example, if the first information indicates the terminal device to increase the proportion of sending the CSI report in the first mode and decrease the proportion of sending the CSI report in the second mode, based on the first information, the terminal device may increase the proportion of sending the CSI report in the first mode and decrease the proportion of sending the CSI report in the second mode.

Optionally, before the network device sends the first information to the terminal device based on the first communication performance and the second communication performance, the method may further include:

The network device sends a second activation message to the terminal device, where the second activation message is used to activate a target configuration in the first configuration information.

In some embodiments, that the terminal device sends the CSI reports to the network device based on the first configuration information includes:

The terminal device sends the CSI reports to the network device based on the target configuration.

For example, the target configuration may include a group of N, K, and distribution indication information. The terminal device may send the CSI report to the network device based on N, K, and the distribution indication information.

Optionally, the first configuration information indicates a first CSI report configuration used by the terminal device to send the CSI reports, the first CSI report configuration indicates the terminal device to send N CSI reports to the network device, and N is a positive integer. A quantity of CSI reports sent by the terminal device in the first mode is K, a quantity of CSI reports sent by the terminal device in the second mode is N-K, and K is an integer greater than or equal to 0 and less than or equal to N.

In some embodiments, the first CSI report configuration further indicates the terminal device to send a plurality of groups of N CSI reports.

For example, for the first CSI report configuration, refer to the foregoing related description of FIG. 3. For brevity, details are not described again.

Optionally, the first configuration information indicates a first CSI report group configuration used by the terminal device to send the CSI reports. The first CSI report group configuration includes N second CSI report configurations, N is a positive integer, and each second CSI report configuration indicates one CSI report of the terminal device. A quantity of CSI reports sent by the terminal device in the first mode is K, a quantity of CSI reports sent by the terminal device in the second mode is N-K, and K is an integer greater than or equal to 0 and less than or equal to N.

In some embodiments, each second CSI report configuration indicates the terminal device to send a plurality of CSI reports.

For example, for the first CSI report group configuration, refer to the foregoing related description of FIG. 4. For brevity, details are not described again.

Optionally, the first configuration information indicates a second CSI report group configuration used by the terminal device to send the CSI reports, the second CSI report group configuration includes two third CSI report configurations, one of the two third CSI report configurations indicates the terminal device to send the CSI report in the first mode, and the other of the two third CSI report configurations indicates the terminal device to send the CSI report in the second mode.

In some embodiments, a periodicity in which the terminal device sends CSI reports in the first mode is NT/K, and a periodicity in which the terminal device sends the CSI report in the second mode is T. N is a positive integer, K is a natural number, and the terminal device does not send the CSI report in the first mode when K is equal to 0.

For example, for the second CSI report group configuration, refer to the foregoing related description of FIG. 5. For brevity, details are not described again.

Optionally, the first configuration information further indicates a proportion set list, each proportion set in the proportion set list includes a group of pieces of proportion configuration information, and the proportion configuration information includes one or more of the following information: N, K, and distribution indication information, where the distribution indication information indicates distribution of the first mode and the second mode.

Optionally, the first information is a first activation message, and the first activation message is used to activate a proportion set in the proportion set list; and N, K, and the distribution indication information are used to implement the first CSI report configuration;
N, K, and the distribution indication information are used to implement the first CSI report group configuration; or
N, K, and the distribution indication information are used to implement the second CSI report group configuration.

It should be understood that, in this case, for a technical solution in which the terminal device adjusts, based on the first information, the proportion of sending the CSI report by the terminal device in the first mode and/or the proportion of sending the CSI report by the terminal device in the second mode, refer to the foregoing related descriptions of (a) and (b) in FIG. 6. For brevity, details are not described again.

It should be understood that the first activation message may be a MAC CE message or a DCI message.

In some embodiments, when the first activation message is the MAC CE message, the MAC CE message may also directly carry a group of N, K, and distribution indication information. Therefore, after receiving the MAC CE message, the terminal device may send the CSI report based on N, K, and the distribution indication information. In the technical solution, the terminal device can quickly perform adjustment, thereby improving efficiency of adjusting CSI reports sent in different modes. It should be understood that the MAC CE message may alternatively carry only one or more of N, K, and the distribution indication information, and other information uses a configuration that is agreed upon in advance or is being used.

In some embodiments, the foregoing target configuration may include the proportion set in the proportion set list.

Optionally, the first configuration information may be carried in an RRC message.

In this embodiment of this application, the first mode may be an artificial intelligence AI-based CSI report feedback mode, and the second mode may be a codebook-based CSI report feedback mode. It should be understood that the first mode and the second mode may alternatively be other CSI report feedback modes. This is not limited in embodiments of this application.

Based on this embodiment of this application, the network device may configure a hybrid working mode of the first mode and the second mode for the terminal device, the terminal device sends the CSI report based on the configuration information of the network device, and the terminal device may evaluate the two types of communication performance, and send an evaluation result to the network device. The network device sends, to the terminal device based on the evaluation result, information that indicates the terminal device to adjust the proportion of sending the CSI reports in the first mode and the second mode. In the technical solution, performance in the two modes can be effectively monitored with low overheads. Further, a working mode of sending the CSI report by the terminal device can be adjusted in real time or in quasi-real time.

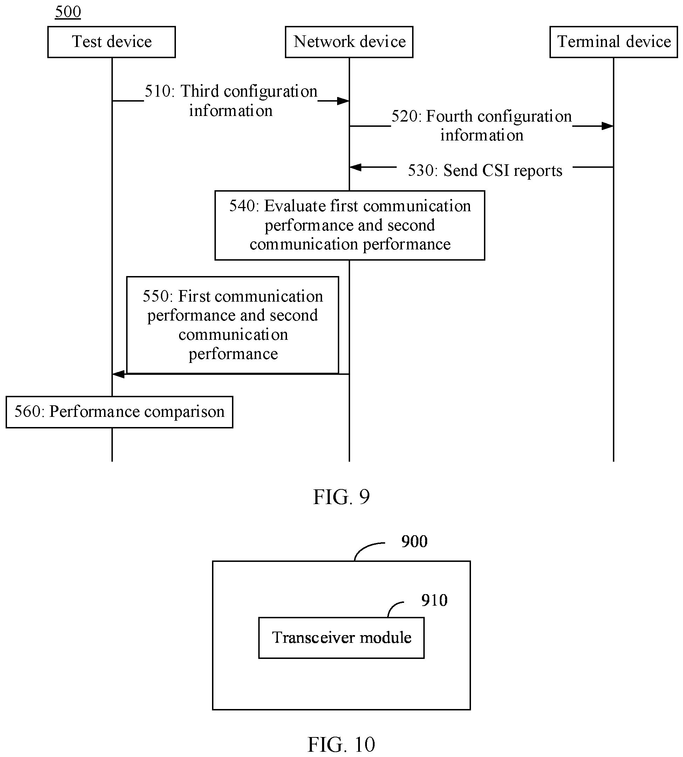

FIG. 9 is a schematic interaction diagram of a communication method according to an embodiment of this application. Interaction between a network device, a terminal device, and a test device is used as an example. As shown in FIG. 9, the method 500 may include steps 510 to 560.

510: The test device sends third configuration information to the network device, where the third configuration information indicates the network device to work in a hybrid working mode of a first mode and a second mode.

For example, the third configuration information indicates the network device to start a test mode, or indicate the network device to configure the terminal device to send CSI reports in the first mode and the second mode alternately, and receive the CSI reports sent by the terminal device in the first mode and the second mode alternately.

Optionally, the third configuration information may include test start time, test duration or a test data amount, an evaluation indicator, and the like.

The first mode may be an AI-based CSI report feedback mode, and the second mode may be a codebook-based CSI report feedback mode.

It should be understood that, in some embodiments, the network device and the test device may be a same device.

520: Based on step 510, the network device sends fourth configuration information to the terminal device, where the fourth configuration information indicates the terminal device to send the CSI reports in a hybrid mode of a first mode and a second mode.

For the fourth configuration information, refer to the foregoing related description of the first configuration information. For brevity, details are not described again.

Optionally, the fourth configuration information may also include the test start time, the test duration or the test data amount, the evaluation indicator, and the like.

It should be understood that, in some embodiments, the fourth configuration information may alternatively be sent by the test device to the terminal device.

530: The terminal device sends the CSI reports to the network device based on the fourth configuration information.

It should be understood that, for a specific process in which the terminal device sends the CSI reports to the network device based on the fourth configuration information, refer to the related description of step 320. For brevity, details are not described again.

540: The network device evaluates first communication performance and second communication performance.

It should be understood that, for a related description of step 540, refer to the related description of step 330. For brevity, details are not described again.

In some embodiments, the first communication performance and the second communication performance may be evaluated by the terminal device. For details, refer to the related description of step 430.

550: The network device sends the first communication performance and the second communication performance to the test device.

In some embodiments, when the first communication performance and the second communication performance are evaluated by the terminal device, the terminal device may send the first communication performance and the second communication performance to the test device.

560: The test device performs performance comparison based on the first communication performance and the second communication performance.

For example, the test device may obtain a performance gain of one mode relative to another mode through calculation, to determine performance of sending the CSI reports by the terminal device in the two modes.

FIG. 10 is a schematic block diagram of a communication apparatus according to an embodiment of this application. As shown in FIG. 10, the communication apparatus 900 may include a transceiver module 910.

The transceiver module 910 may be configured to support the communication apparatus 900 in performing the foregoing steps 210, 220, 310, 340, 410, 450, and the like, and/or configured to support the communication apparatus 900 in performing another process of the technology described in this specification.

It should be noted that all related content of steps in the foregoing method embodiments may be cited in function description of corresponding functional modules. Details are not described herein again.

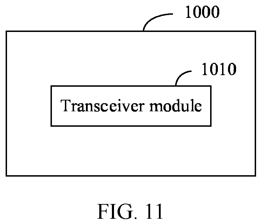

FIG. 11 is a schematic block diagram of another communication apparatus according to an embodiment of this application. As shown in FIG. 11, the communication apparatus 1000 may include a transceiver module 1010.

The transceiver module 1010 may be configured to support the communication apparatus 1000 in performing the foregoing steps 220, 320, 420, 440, and the like, and/or configured to support the communication apparatus 1000 in performing another process of the technology described in this specification.

It should be noted that all related content of steps in the foregoing method embodiments may be cited in function description of corresponding functional modules. Details are not described herein again.

An embodiment of this application further provides a communication apparatus, including at least one processor, where the at least one processor is coupled to at least one memory, and the at least one processor is configured to execute a computer program or instructions stored in the at least one memory, so that the communication method described in any one of the foregoing embodiments is performed.

It should be understood that the communication apparatus may be the network device in the foregoing embodiments, and the network device may be configured to perform a step of the network device in the foregoing embodiments, to implement a corresponding function.

Alternatively, the communication apparatus may be the terminal device in the foregoing embodiments, and the terminal device may be configured to perform a step of the terminal device in the foregoing embodiments, to implement a corresponding function.

An embodiment of this application further provides a chip. The chip is coupled to a memory, and is configured to read and execute program instructions stored in the memory, to implement the communication method described in any one of the foregoing embodiments.

An embodiment of this application further provides a chip. The chip includes a processor and a communication interface. The communication interface is configured to receive a signal, and transmit the signal to the processor, and the processor processes the signal, so that the communication method described in any one of the foregoing embodiments is performed.

An embodiment of this application further provides a computer storage medium. The computer storage medium stores computer instructions. When the computer instructions are run on a computer, the communication method in the foregoing related embodiment is implemented.

An embodiment of this application further provides a computer program product. When the computer program product runs on a computer, the computer performs the foregoing related steps, and the communication method in the foregoing related embodiment is implemented.

In addition, an embodiment of this application further provides an apparatus. The apparatus may be specifically a chip, a component, or a module. The apparatus may include a processor and a memory that are connected. The memory is configured to store computerexecutable instructions. When the apparatus runs, the processor may execute the computerexecutable instructions stored in the memory, so that the chip performs the methods in the foregoing method embodiments.

The communication apparatus, the computer storage medium, the computer program product, or the chip provided in embodiments is configured to perform a corresponding method provided above. Therefore, for beneficial effects that can be achieved by the communication apparatus, the computer storage medium, the computer program product, or the chip, refer to the beneficial effects of the corresponding method provided above. Details are not described herein again.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing described apparatus embodiments are merely examples. For example, division into the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first device, first configuration information sent by a second device, wherein the first configuration information indicates the first device to send channel state information CSI reports in a hybrid mode of a first mode and a second mode; and
receiving, by the first device, first information sent by the second device, wherein the first information indicates the first device to adjust a proportion of sending a CSI report in the first mode and/or a proportion of sending a CSI report in the second mode, the first information is determined by the second device based on first communication performance and second communication performance, the first communication performance is communication performance of communicating with the first device by the second device based on the CSI report sent by the first device in the first mode, and the second communication performance is communication performance of communicating with the first device by the second device based on the CSI report sent by the first device in the second mode.

2. The method according to claim 1, wherein before the receiving, by the first device, first information sent by the second device, the method further comprises:
receiving a second activation message sent by the second device, wherein the second activation message is used to activate a target configuration in the first configuration information; and
sending, by the first device, the CSI reports to the second device based on the target configuration.

3. The method according to claim 1, wherein before the receiving, by the first device, first information sent by the second device, the method further comprises:
sending second information to the second device, wherein the second information comprises the first communication performance and the second communication performance, or the second information comprises a comparison result between the first communication performance and the second communication performance.

4. The method according to any one of claims 1 to 3, wherein the method further comprises:
adjusting, by the first device based on the first information, the proportion of sending the CSI report by the first device in the first mode and/or the proportion of sending the CSI report by the first device in the second mode.

5. The method according to claim 4, wherein the adjusting, by the first device based on the first information, the proportion of sending the CSI report by the first device in the first mode and/or the proportion of sending the CSI report by the first device in the second mode comprises:
determining, based on a first activation message, a CSI report configuration identifier and a proportion set sequence number that are in a trigger state list;
determining a CSI report configuration table based on the CSI report configuration identifier;
determining a proportion set list based on the CSI report configuration table; and
determining and activating a proportion set in the proportion set list based on the proportion set list and the proportion set sequence number.

6. The method according to claim 4, wherein the adjusting, by the first device based on the first information, the proportion of sending the CSI report by the first device in the first mode and/or the proportion of sending the CSI report by the first device in the second mode comprises:
determining a CSI report configuration identifier in a trigger state list based on a first activation message;
determining a CSI report configuration table based on the CSI report configuration identifier;
determining a proportion set list based on the CSI report configuration table; and
determining and activating a proportion set in the proportion set list based on the proportion set list and a proportion set sequence number in the first activation message.

7. A communication method, comprising:
sending, by a second device, first configuration information to a first device, wherein the first configuration information indicates the first device to send channel state information CSI reports in a hybrid mode of a first mode and a second mode; and
sending, by the second device, first information to the first device based on first communication performance and second communication performance, wherein the first information indicates the first device to adjust a proportion of sending a CSI report in the first mode and/or a proportion of sending a CSI report in the second mode, the first communication performance is communication performance of communicating with the first device by the second device based on the CSI report sent by the first device in the first mode, and the second communication performance is communication performance of communicating with the first device by the second device based on the CSI report sent by the first device in the second mode.

8. The method according to claim 7, wherein before the sending, by the second device, first information to the first device based on first communication performance and second communication performance, the method further comprises:
sending a second activation message to the first device, wherein the second activation message is used to activate a target configuration in the first configuration information.

9. The method according to claim 7, wherein before the sending, by the second device, first information to the first device based on first communication performance and second communication performance, the method further comprises:
receiving second information sent by the first device, wherein the second information comprises the first communication performance and the second communication performance, or the second information comprises a comparison result between the first communication performance and the second communication performance.

10. The method according to any one of claims 1 to 9, wherein the first configuration information further comprises the following information:
an evaluation indication, indicating the first device to evaluate the first communication performance and the second communication performance;
an evaluation indicator, indicating the first device to evaluate the first communication performance and the second communication performance based on the evaluation indicator; or
evaluation duration, indicating duration in which the first device evaluates the first communication performance and the second communication performance.

11. The method according to any one of claims 1 to 10, wherein if the first communication performance is higher than the second communication performance, the first information indicates the first device to increase the proportion of the first mode and decrease the proportion of the second mode; or
if the first communication performance is lower than the second communication performance, the first information indicates the first device to decrease the proportion of the first mode and increase the proportion of the second mode.

12. The method according to any one of claims 1 to 11, wherein the first configuration information indicates a first CSI report configuration used by the first device to send the CSI reports, the first CSI report configuration indicates the first device to send N CSI reports to the second device, and N is a positive integer; and a quantity of CSI reports sent by the first device in the first mode is K, a quantity of CSI reports sent by the first device in the second mode is N-K, and K is an integer greater than or equal to 0 and less than or equal to N.

13. The method according to claim 12, wherein the first CSI report configuration further indicates the first device to send a plurality of groups of N CSI reports.

14. The method according to any one of claims 1 to 11, wherein the first configuration information indicates a first CSI report group configuration used by the first device to send the CSI reports, the first CSI report group configuration comprises N second CSI report configurations, N is a positive integer, and each second CSI report configuration indicates one CSI report of the first device; and a quantity of CSI reports sent by the first device in the first mode is K, a quantity of CSI reports sent by the first device in the second mode is N-K, and K is an integer greater than or equal to 0 and less than or equal to N.

15. The method according to claim 14, wherein each second CSI report configuration indicates the first device to send a plurality of CSI reports.

16. The method according to any one of claims 1 to 11, wherein the first configuration information indicates a second CSI report group configuration used by the first device to send the CSI reports, the second CSI report group configuration comprises two third CSI report configurations, one of the two third CSI report configurations indicates the first device to send the CSI report in the first mode, and the other of the two third CSI report configurations indicates the first device to send the CSI report in the second mode.

17. The method according to claim 16, wherein a periodicity in which the first device sends the CSI report in the first mode is NT/K, a periodicity in which the first device sends the CSI report in the second mode is T, N is a positive integer, K is a natural number, and the first device does not send the CSI report in the first mode when K is equal to 0.

18. The method according to any one of claims 1 to 17, wherein the first configuration information further indicates a proportion set list, each proportion set in the proportion set list comprises a group of pieces of proportion configuration information, and the proportion configuration information comprises one or more of the following information: N, K, or distribution indication information, wherein the distribution indication information indicates distribution of the first mode and the second mode.

19. The method according to claim 18, wherein the first information is a first activation message, and the first activation message is used to activate a proportion set in the proportion set list; and N, K, and the distribution indication information are used to implement the first CSI report configuration;
N, K, and the distribution indication information are used to implement the first CSI report group configuration; or
N, K, and the distribution indication information are used to implement the second CSI report group configuration.

20. The method according to claim 19, wherein the first activation message is a MAC CE message or a DCI message.

21. The method according to claim 19, wherein the target configuration comprises the proportion set in the proportion set list.

22. The method according to any one of claims 1 to 20, wherein the first configuration information is carried in a radio resource control RRC message.

23. The method according to any one of claims 1 to 22, wherein the first mode is an artificial intelligence AI-based CSI report feedback mode, and
the second mode is a codebook-based CSI report feedback mode.

24. A communication apparatus, comprising a module configured to implement the communication method according to any one of claims 1 to 6 or claims 7 to 23.

25. A communication apparatus, comprising at least one processor, wherein the at least one processor is coupled to at least one memory, and the at least one processor is configured to execute a computer program or instructions stored in the at least one memory, so that the communication method according to any one of claims 1 to 6 or claims 7 to 23 is performed.

26. A computer-readable storage medium, comprising a computer program or instructions stored in the storage medium, wherein when the computer program or instructions are executed by a communication apparatus, the communication method according to any one of claims 1 to 6 or claims 7 to 23 is performed.

27. A computer program product comprising instructions, wherein when the computer program product runs on a computer, the computer is enabled to perform the communication method according to any one of claims 1 to 6 or claims 7 to 23.

28. A chip, wherein the chip is coupled to a memory, and is configured to read and execute program instructions stored in the memory, to implement the communication method according to any one of claims 1 to 6 or claims 7 to 23.
